# DEMANDE DE BREVET EUROPEEN

(11) **EP 0 633 160 A1**
(43) Date de publication de la demande: **11.01.1995**
(21) Numéro de dépôt: 94401561.9
(22) Date de dépôt: 07.07.1994
(51) Int. Cl.: B60N 2/30

(54) **Siège à construction modulaire pour véhicules automobiles**

(30) Priorité: 08.07.1993 FR 9308391
(71) Demandeur: RENAULT VEHICULES INDUSTRIELS, F-69003 Lyon (FR)
(72) Inventeur: Lambert, Benoît, F-78420 Carrieres-sur-Seine (FR)
(74) Mandataire: Ernst-Schonberg, Michel

(57) **Abrégé**

Siège à construction modulaire pour véhicules automobiles constitué par un module support (12, 13), une coquille relevable (21) de coussin d'assise (20) solidaire dudit module de support, un dossier (23) monté à articulation sur ladite coquille (21), au moins un module d'accoudoir (27) relevable et un ancrage (28) de ceinture de sécurité, caractérisé par le fait que l'accoudoir (27) et l'ancrage (28) de la ceinture de sécurité sont solidaires de l'axe d'articulation (24) du dossier (23) et que ce dernier possède une première portée (231) cylindrique qui s'étend transversalement à partir du flanc du dossier vers un flasque (30) de montage dudit dossier sur la coquille (21) du coussin d'assise (20) et surplombe une deuxième portée cylindrique périphérique complémentaire (221) qui s'étend transversalement à partir du flanc du siège vers ledit flasque de montage (30) dans le but de permettre la rotation de l'accoudoir (27) sensiblement le long d'un flanc latéral commun du dossier et du coussin de l'assise.

## Description

L'invention concerne un siège à construction modulaire pour véhicules automobiles constitué par un module support, une coquille relevable de coussin d'assise solidaire dudit module, un dossier monté à articulation sur ladite coquille, au moins un module d'accoudoir relevable et un ancrage de ceinture de sécurité.

La publication FR-A-1356097 décrit un siège relevable articulé sur un support, dont le fond de l'assise constitue, dans la position d'utilisation du siège le couvercle d'un caisson fixe.

La publication US-A-3193324 décrit un siège à dossier articulé monté sur un support, dont la position horizontale permet l'agencement d'une couchette.

Le JP Patent abstract 63.151552 décrit un siège convertible dans lequel des accoudoirs articulés sur le dossier peuvent occuper soit une position érigée de rangement, soit une position horizontale d'utilisation.

Les aménagements d'habitacles de véhicules automobiles nécessitent l'emploi de sièges dont les composants permettent la constitution d'éléments fonctionnels nécessaires à l'aménagement de compartiments de rangement intégrés aux sièges ou de plateaux-support lorsque le dossier et l'assise n'occupent pas une position en correspondance avec l'utilisation du siège par un passager.

L'invention a pour objet un siège du type précité permettant l'aménagement fonctionnel rapide de l'habitacle lorsque le siège n'est pas occupé.

L'invention a aussi pour objet un siège repliable susceptible d'occuper au choix, une position érigée dans laquelle l'assise et le dossier occupent une position accolée, ou une position horizontale, dans laquelle l'assise et le dossier sont superposés.

L'invention concerne plus particulièrement un tel siège qui possède un dossier monté à articulation sur la coquille relevable du coussin d'assise, au moins un module accoudoir relevable et un ancrage de ceinture de sécurité.

Selon l'invention l'accoudoir et l'ancrage de la ceinture sont solidaires de l'axe d'articulation du dossier et ce dernier possède une première portée cylindrique qui s'étend transversalement à partir du flanc du dossier vers un flasque de montage dudit dossier sur la coquille du coussin d'assise tandisqu'une deuxième portée cylindrique périphérique surplombée par ladite première portée s'étend transversalement à partir du flanc du siège vers ledit flasque de montage, dans le but de permettre la rotation de l'accoudoir le long d'un flanc latéral commun du dossier et du coussin de l'assise.

Selon une autre caractéristique du siège, l'ancrage de la ceinture de sécurité est encastré dans une extension du module support, localisée verticalement à l'aplomb du flanc latéral du dossier, dont la surface extérieure est constituée par la deuxième portée cylindrique périphérique adjacente et complémentaire de la première portée cylindrique localisée sur le dossier.

Le siège selon l'invention possède avantageusement des surfaces d'appui complémentaires localisées sur le dossier et sur l'assise dans le but de conférer à l'ensemble du siège un aspect compact quelle que soit la position relative du dossier et de l'assise.

D'autres caractéristiques et avantages de l'invention apparaîtront à la lecture de la description d'un exemple de réalisation du siège en référence au dessin annexé dans lequel :

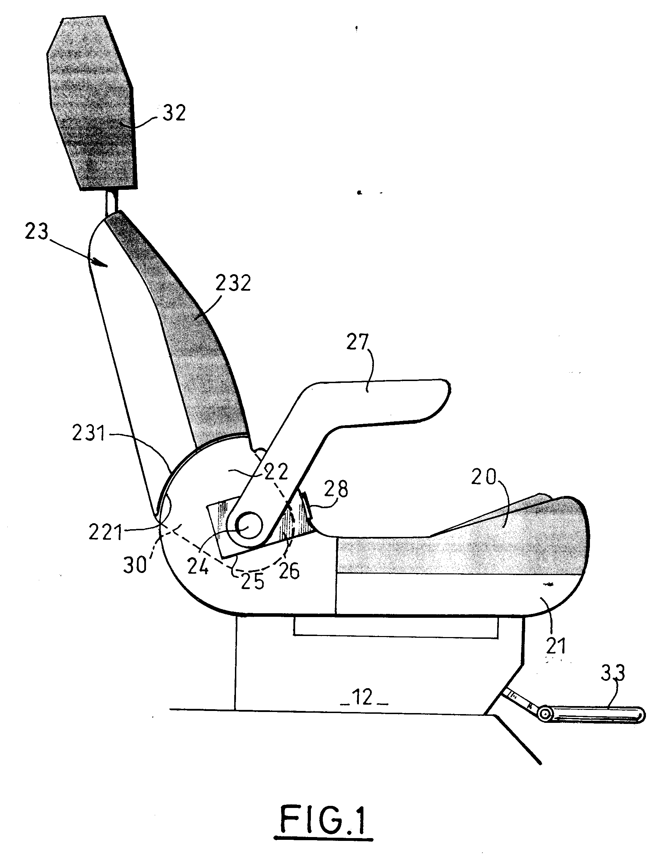

- la figure 1 est une vue en élévation du siège conforme à l'invention,
- la figure 2 est une vue en élévation du siège représenté à la figure 1 en sa position de rangement contre une cloison adjacente,

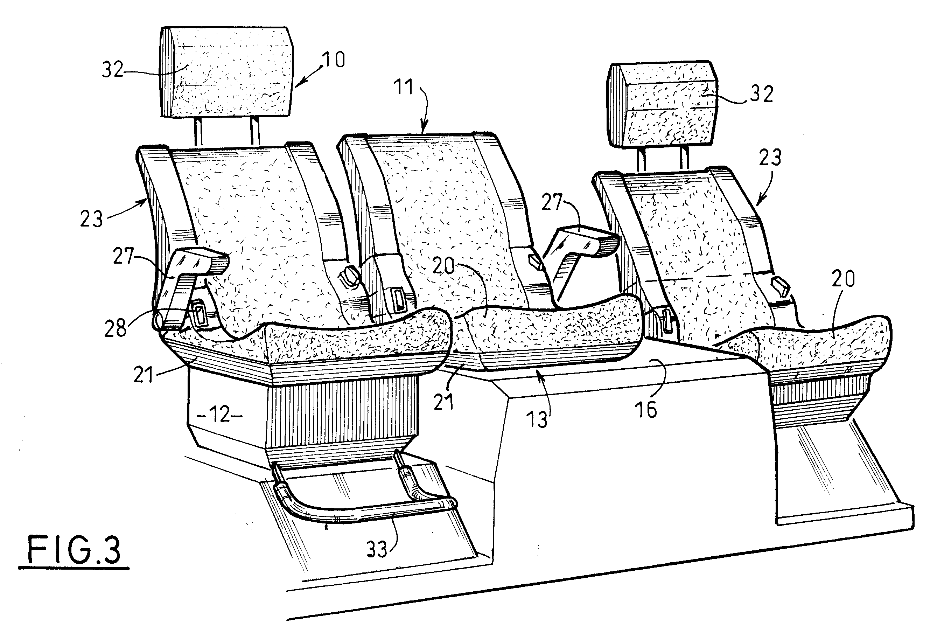

- la figure 3 est une représentation perspective d'un agencement de trois sièges dans un habitacle de véhicule automobile,
- les figures 4 et 5 sont des représentations partielles de l'agencement conforme à la figure 3 montrant les possibilités de rangement du siège.

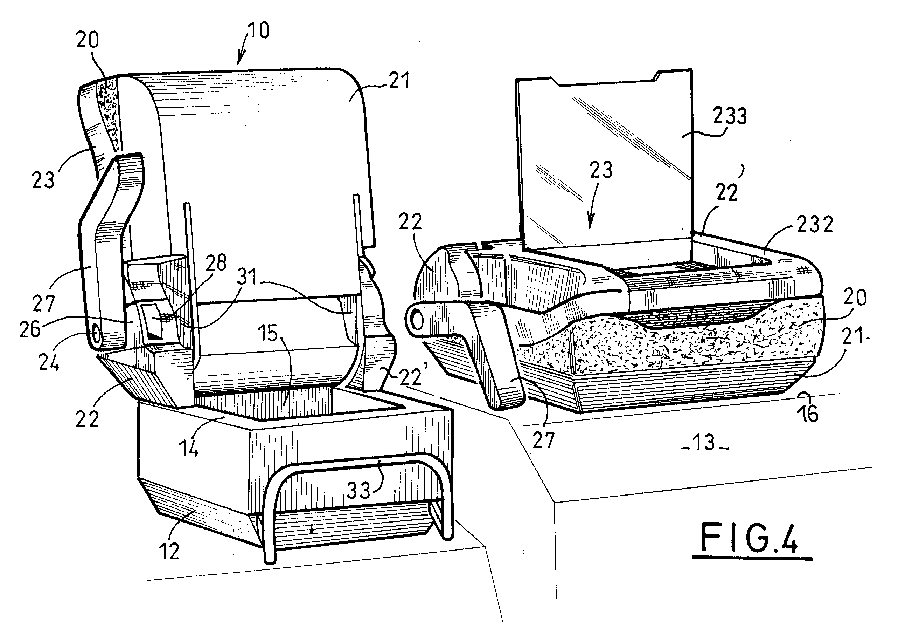

Ainsi que cela est représenté à la figure 4, les sièges 10, 11 sont montés sur des modules support respectifs 12, 13. Le support 12 se présente sous la forme d'un bac de rangement dont les bords supérieurs 14 délimitent une ouverture 15 de forme sensiblement carrée qui peut recevoir des équipements ou des accessoires.

Le support 13 est constitué par un couvercle de fermeture 16 et peut recouvrir partiellement le moteur d'entraînement du véhicule.

Chaque siège tel que 10 ou 11 possède un coussin d'assise 20 monté dans une coquille relevable 21 portée par le support 12 ou 13.

A cet effet les supports 12, 13 sont surplombés par des extensions latérales 22, 22' localisées verticalement à l'aplomb du flanc d'un dossier articulé 23. Un axe d'articulation tubulaire 24 est supporté latéralement par les extensions 22, 22'. A cet effet chaque extension 22, 22' possède une cavité 25 de montage d'un bloc palier 26 encastré dans la cavité correspondante. Le bloc palier 26 porte un module accoudoir relevable 27 conjointement avec une boucle d'encrage 28 de la ceinture de sécurité dans le but de solidariser simultanément lesdits accoudoir et boucle 27, 28 avec l'axe 24.

Dans le but de permettre l'articulation du dossier 23 autour de l'axe 24, le dossier 23 se prolonge vers le bas par les flasques de montage 30 comportant une ouverture de passage de l'axe 24.

De manière analogue la coquille relevable 21 du coussin d'assise 20, porte deux flasques de montage 31 comportant également une ouverture de passage de l'axe 24.

L'axe 24 supporte de la sorte conjointement, l'assise 20 et sa coquille 21, le dossier 23, le module accoudoir 27 et la boucle 28 d'ancrage de la ceinture de sécurité.

Une liaison particulièrement rigide de l'axe 24 avec le support 12 ou 13 est obtenue par l'intermédiaire du bloc palier 26 et par les ancrages non représentés dudit support avec le plancher du véhicule. A cet effet le support possède avantageusement une armature de rigidification apte à supporter les efforts de traction ou d'arrachement.

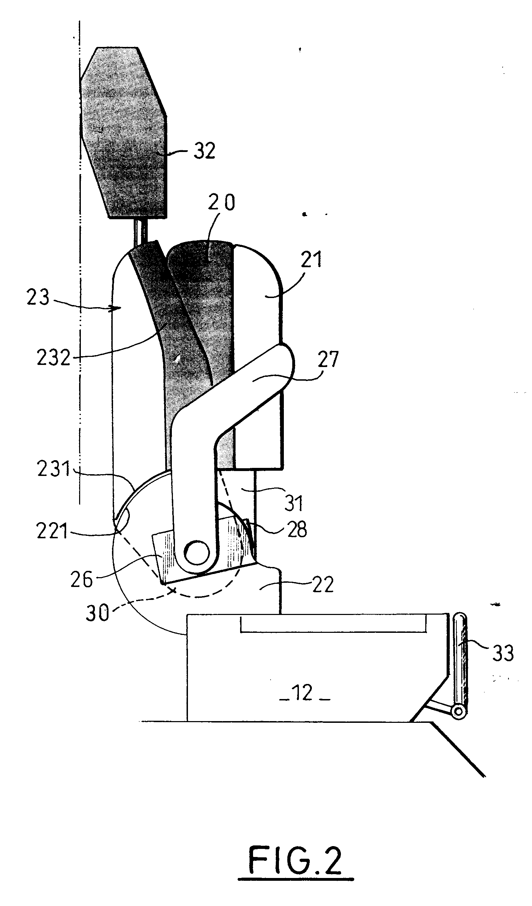

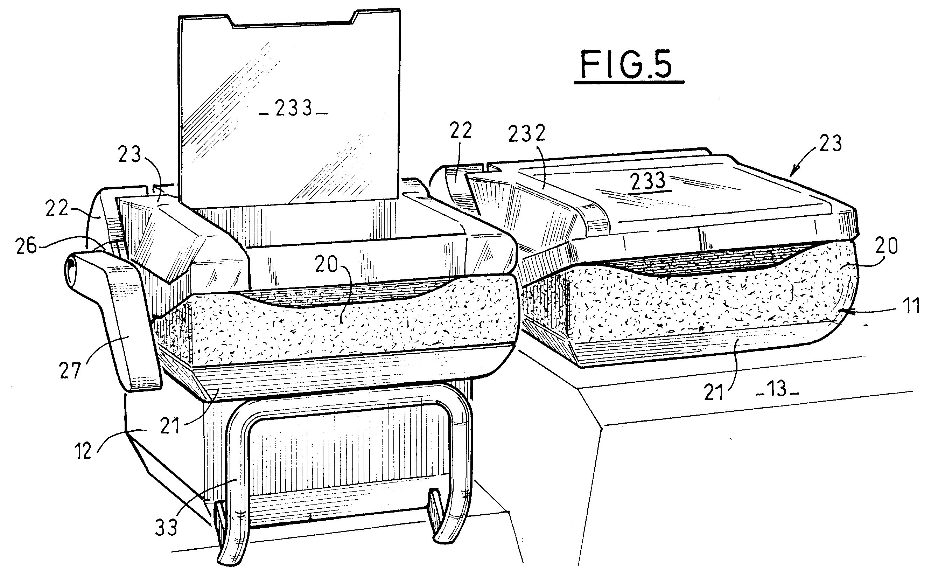

Dans le but de permettre soit le mouvement de relevage du module d'assise 20, 21 contre la surface du dossier 23 comme indiqué à la figure 2 ; soit le mouvement de basculement du dossier 23 au contact du coussin 20 de l'assise comme indiqué à la figure 5, les surfaces d'appui respectives du dossier 23 et du coussin 20 de l'assise sont complémentaires.

Par ailleurs les mouvements de relevage du module 20, 21 ou le basculement du dossier sont facilités par la caractéristique constructive suivant laquelle les flancs latéraux du dossier 23 sont limités à la base du dossier par une première portée cylindrique 231 qui s'étend transversalement à partir du flanc correspondant 232 vers le flasque de montage 30 du dossier sur l'axe 24.

La portée cylindrique telle que 231 surplombe les extensions 22, 22' verticales des modules support 12, 13 et la surface extérieure desdites extensions constitue une deuxième portée cylindrique 221, périphérique adjacente et complémentaire de la portée telle que 231 localisée sur le dossier. Cet agencement des portées 231 et 221 permet la rotation de l'accoudoir 27 sensiblement le long d'un flanc latéral commun du dossier et du coussin de l'assise.

De manière analogue chaque portée 221, est limitée transversalement par le flanc des extensions 22, 22' et par le plan des flasques de montage 31 de la coquille 21.

Dans le but de conférer au siège tel que 10 un confort augmenté, celui-ci porte un appuie-tête amovible 32, ainsi que cela est bien connu, et un repose-pied repliable 33 articulé autour d'un axe porté par le support 12.

Par ailleurs la face arrière du dossier 23 du siège peut porter avantageusement un couvercle 233 d'un plateau de rangement réalisé sur la coquille de montage 232 de la matelassure dudit dossier.

## Revendications

**1)** Siège à construction modulaire pour véhicules automobiles constitué par un module support (12, 13), une coquille relevable (21) de coussin d'assise (20) solidaire dudit module de support, un dossier (23) monté à articulation sur ladite coquille (21), au moins un module d'accoudoir (27) relevable et un ancrage (28) de ceinture de sécurité, caractérisé par le fait que l'accoudoir (27) et l'ancrage (28) de la ceinture de sécurité sont solidaires de l'axe d'articulation (24) du dossier (23) et que ce dernier possède une première portée (231) cylindrique qui s'étend transversalement à partir du flanc du dossier vers un flasque (30) de montage dudit dossier sur la coquille (21) du coussin d'assise (20) et surplombe une deuxième portée cylindrique périphérique complémentaire (221) qui s'étend transversalement à partir du flanc du siège vers ledit flasque de montage (30) dans le but de permettre la rotation de l'accoudoir (27) sensiblement le long d'un flanc latéral commun du dossier et du coussin de l'assise.

**2)** Siège selon la revendication 1, caractérisé par le fait que l'ancrage (28) de la ceinture de sécurité est encastré dans une extension (22) du module support (12, 13) localisée verticalement à l'aplomb du flanc latéral du dossier (23) dont la surface extérieure est constituée par la deuxième portée cylindrique périphérique (221) adjacente et complémentaire de la première portée cylindrique (231) localisée sur le dossier (23).

**3)** Siège selon la revendication 2, caractérisé par le fait que la coquille (21) de l'assise (20) est montée à articulation autour de l'axe d'articulation (24) du dossier (23) dont la surface d'appui est complémentaire de la surface d'appui de l'assise.

**4)** Siège selon l'une quelconque des revendications 1, 2 et 3, caractérisé par le fait que le module de support (12) est constitué par un bac de rangement dont la paroi frontale porte un repose-pieds repliable (33).
